# EUROPÄISCHE PATENTSCHRIFT

(11) **EP 2 162 933 B1**
(45) Veröffentlichungstag und Bekanntmachung des Hinweises auf die Patenterteilung: **08.07.2020**
(21) Anmeldenummer: 08750019.5
(22) Anmeldetag: 05.05.2008
(51) Int. Cl.: H01M 2/10

(54) **ANORDNUNG MIT WENIGSTENS EINER BATTERIE**
ARRANGEMENT HAVING AT LEAST ONE BATTERY
AGENCEMENT COMPRENANT AU MOINS UNE BATTERIE

(30) Priorität: 27.06.2007 DE 102007029744
(43) Veröffentlichungstag der Anmeldung: 17.03.2010
(73) Patentinhaber: Robert Bosch GmbH, 70442 Stuttgart (DE)
(72) Erfinder: MATTHIAS, Wolf, 70469 Stuttgart (DE)
(86) Internationale Anmeldenummer: PCT/EP2008/055453
(87) Internationale Veröffentlichungsnummer: WO 2009/000583

(56) Entgegenhaltungen:
- EP-A- 1 353 429
- FR-A- 2 731 113
- JP-A- 2003 007 285

## Beschreibung

### Stand der Technik

Die Erfindung geht aus von einer Anordnung mit wenigstens einer Batterie, insbesondere in Form eines Akku-Packs für eine Handwerkzeugmaschine.

Moderne Handwerkzeugmaschinen, wie beispielsweise Handbohrmaschinen oder Akku-Schrauber, werden oftmals durch Akku-Packs mit Strom versorgt, wobei die Akku-Packs mehrere Speicherzellen aufweisen, die elektrisch miteinander verbunden sind, beispielsweise durch eine Kunststoffummantelung zusammengehalten werden.

Beim Betrieb derartiger Akku-Packs ist es erforderlich, dass die Speicherzellen gegen eine Überhitzung geschützt werden müssen.

Aus der JP 2003007285 A und der EP 1 353 429 A1 ist eine Schutzschaltung für eine Batterie bekannt, bei der ein Widerstand und ein PTC-Widerstand oder ein Bimetallschalter parallelgeschaltet sind.

Aus der FR 2 731 113 ist eine weitere Schutzschaltung für eine Batterie bekannt, bei der ein PTC-Widerstand zu einem Bimetallschalter parallelgeschaltet ist. Der Bimetallschalter weist einen geringeren Widerstand als der PTC-Widerstand auf. Bei Erhitzen der Batterie schaltet zuerst der Bimetallschalter ab und anschließend, bei einer höheren Temperatur, der PTC-Widerstand.

### Vorteile der Erfindung

Die Erfindung umfasst die allgemeine technische Lehre, eine Parallelschaltung zweier temperaturempfindlicher PTC-Widerstände zwischen einem Pol der Batterie und einem elektrischen Kontakt der Anordnung vorzusehen. Es ist dabei ein erster PTC-Widerstand vorgesehen, der bei einer ersten Temperatur derart sperrend schaltet, dass sein elektrischer Widerstand auf einen Sperrwert ansteigt und im Sinne einer Leistungsübertragung keine Stromleitung mehr erfolgt. Weiterhin ist ein zweiter PTC-Widerstand vorgesehen, der bei einer zweiten Temperatur derart sperrend schaltet, dass sein elektrischer Widerstand auf einen Sperrwert ansteigt und im Sinne einer Leistungsübertragung keine Stromleitung mehr erfolgt, wobei die erste Temperatur größer als die zweite ist. Auf diese Weise wird eine einfache Möglichkeit bereitgestellt, eine individuelle Anpassung der Schalttemperatur zu ermöglichen, bei der die elektrische Verbindung zwischen der Batterie und dem elektrischen Kontakt unterbrochen wird. Zudem ist aufgrund der Parallelschaltung der PTC-Widerstände der Gesamtwiderstand relativ gering. Der erste PTC-Widerstand weist eine Stromtragfähigkeit auf, die größer der Stromtragfähigkeit des zweiten PTC-Widerstands ist. Dadurch wird bis zum endgültigen Sperrendschalten der Anordnung eine hohe Stromversorgung der Batterie ermöglicht.

Weitere vorteilhafte Ausführungsformen der Erfindung sind in den abhängigen Ansprüchen angegeben.

In einer weiteren Ausführungsform ist die Batterie als aufladbare Batterie ausgebildet.

In einer weiteren Ausführungsform weist die Batterie Lithium-Ionen auf. Vorzugsweise weist die Kathode der Batterie Lithium-Eisen-Phosphat auf. Mit der beschriebenen Anordnung der Parallelschaltung der Widerstände ist es möglich, eine einfache Absicherung der Batterien mit Lithium-Ionen gegen Überhitzung darzustellen.

In einer weiteren bevorzugten Ausführungsform wird die aufladbare Batterie über den ersten und den zweiten elektrischen Kontakt beladen und entladen. Somit sind nur die zwei elektrischen Kontakte zur elektrischen Kontaktierung der aufladbaren Batterie vorgesehen. Auf diese Weise wirkt die thermische Absicherung durch die Parallelschaltung des ersten und zweiten PTC-Widerstandes nicht nur bei der Abgabe von Strom, sondern auch bei der Aufnahme von Strom beim Aufladevorgang der Batterie.

Die Erfindung wird im Folgenden anhand der Figuren näher erläutert. Es zeigen:
- Fig. 1: eine schematische Darstellung einer Anordnung mit einer Batterie,
- Fig. 2: eine schematische Darstellung einer Stromkennlinie beim Betrieb der Batterie, und
- Fig. 3: ein Temperaturdiagramm.

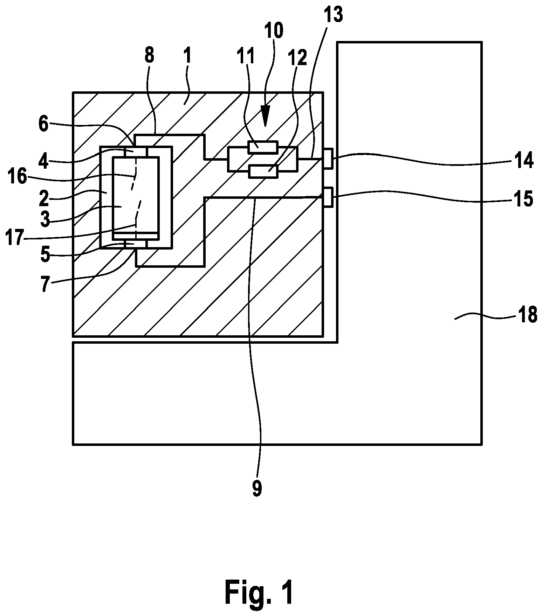

Fig. 1 zeigt ein Gehäuse 1 mit einem Aufnahmeraum 2. Im Aufnahmeraum 2 ist eine Batterie 3 angeordnet. Die Batterie 3 weist einen Pluspol 4 und gegenüberliegend einen Minuspol 5 auf. Der Pluspol 4 stellt einen ersten Pol dar, der mit einer Kathode verbunden ist. Der Minuspol 5 stellt einen zweiten Pol dar, der mit einer Anode 17 verbunden ist. Der Pluspol 4 liegt an einem ersten Gegenkontakt 6 an, der im Gehäuse 1 angrenzend an den Aufnahmeraum 2 im Bereich des Pluspols 4 der Batterie angeordnet ist. Der Minuspol 5 liegt an einem zweiten Gegenkontakt 7 an, der im Gehäuse 1 angrenzend an den Aufnahmeraum 2 im Bereich des Minuspols 5 der Batterie angeordnet ist. Der erste Gegenkontakt 6 ist mit einer ersten elektrischen Leitung 8 verbunden. Die erste Leitung 8 verbindet den ersten Gegenkontakt 6 mit einer Parallelschaltung 10 eines ersten und eines zweiten PTC-Widerstandes 11, 12. Die Parallelschaltung 10 steht mit einer dritten Leitung 13 in Verbindung, die die Parallelschaltung 10 mit einem ersten elektrischen Kontakt 14 verbindet, der an einer Außenseite des Gehäuses 1 ausgebildet ist.

Der zweite Gegenkontakt 7 steht über eine zweite elektrische Leitung 9 mit einem zweiten elektrischen Kontakt 15 in Verbindung, der ebenfalls an einer Außenseite des Gehäuses 1 ausgebildet ist. Der erste und zweite elektrische Kontakt 14, 15 sind zur elektrischen Kontaktierung des Gehäuses 1 vorgesehen. Beispielsweise kann das Gehäuse 1 in einem elektrischen Gerät, beispielsweise in einer Handwerkzeugmaschine, wie z.B. einem Schrauber oder einer Bohrmaschine eingesetzt werden. Die elektrische Kontaktierung zwischen dem Motor des Handwerkzeuges und der Batterie 3 wird über die elektrischen Kontakte 14, 15 hergestellt. In einer weiteren Ausführungsform, in der die Batterie 3 als aufladbare Batterie ausgebildet ist, dienen der erste und der zweite elektrische Kontakt 14, 15 auch zur elektrischen Kontaktierung eines Aufladegerätes, mit dem die elektrische Batterie 3 aufgeladen wird. In dieser Ausführungsform stellt das Gehäuse 1 mit der aufladbaren Batterie 3 einen Akku-Pack dar. Abhängig von der gewählten Ausführungsform können eine oder mehrere Batterien 3 im Gehäuse 1 ausgebildet sein. Zur Erhöhung der elektrischen Spannung an den elektrischen Kontakten 14, 15 sind bei Vorsehen mehrerer Batterien 3, die mehreren Batterien 3 im Gehäuse 1 elektrisch in Serie geschaltet, sodass sich die Spannungen der Batterien 3 addieren und eine entsprechend erhöhte Ausgangsspannung am ersten und zweiten elektrischen Kontakt 14, 15 vorliegt.

Der erste und der zweite elektrische PTC-Widerstand 11, 12 sind in der dargestellten Ausführungsform zwischen dem Pluspol 4 und dem ersten elektrischen Kontakt 14 geordnet. Abhängig von der gewählten Ausführungsform kann die Parallelschaltung des ersten und zweiten PTC-Widerstandes 11, 12 auch zwischen dem Minuspol und dem zweiten elektrischen Kontakt 15 angeordnet sein.

Die Parallelschaltung des ersten und des zweiten PTC-Widerstandes 11, 12 dient als Absicherung der Batterie 3 gegen eine Überhitzung. Die PTC-Widerstände 11, 12 zeichnen sich unter anderem dadurch aus, dass ihr elektrischer Widerstand mit steigender Temperatur zunimmt. Die Abkürzung PTC steht für positiver Temperaturkoeffizient. Abhängig von der gewählten Ausführungsform des PTC können der erste und der zweite PTC-Widerstand ein Widerstandsverhalten aufweisen, das ab einer bestimmten Temperatur sehr stark ansteigt, sodass im Sinn einer Leistungsübertragung keine Stromleitung mehr erfolgt. Die Temperaturen, zu denen die Widerstände des ersten und des zweiten PTC-Widerstandes 11, 12 sehr stark ansteigen, sind unterschiedlich gewählt.

In der gewählten Ausführungsform wird der erste PTC-Widerstand 11 bei einer ersten Schalttemperatur des ersten PTC-Widerstandes 11 sperrend geschaltet. Der zweite PTC-Widerstand 12 wird bei einer zweiten Schalttemperatur sperrend geschaltet, wobei die erste Temperatur größer als die zweite Temperatur ist. Zudem weist der erste PTC-Widerstand 11 eine höhere Stromtragfähigkeit als der zweite PTC-Widerstand 12 auf. Auf diese Weise ist es möglich, einen ersten PTC-Widerstand 11 zu verwenden, dessen Schalttemperatur bis zu einigen Grad oberhalb der zum Schutz der Batterie gewünschten Temperatur liegt. Andererseits kann ein zweiter PTC-Widerstand 12 verwendet werden, dessen Schalttemperatur in dem Bereich liegt, der zum Schutz der Batterie gewünscht ist, dessen Stromtragfähigkeit aber nicht ausreicht, um den entsprechenden Strom von oder zur Batterie zu führen. Die große Stromtragfähigkeit, die für den Betrieb der Batterie gewünscht wird, wird vom ersten PTC-Widerstand 11 bereitgestellt.

Die Batterie 3 kann beispielsweise in Form einer aufladbaren Batterie, d.h. eines Akkus ausgebildet sein, der beispielsweise Lithium Ionen aufweist. In der weiteren Ausführungsform kann Lithium-Eisen-Phosphat in der Kathode der aufladbaren Batterie ausgebildet sein. Eine aufladbare Batterie mit Lithium Ionen und mit Lithium-Eisen-Phosphat als Bestandteil des Kathodenmaterials weist den Vorteil auf, dass die aufladbare Batterie relativ unempfindlich gegenüber Überhitzung ist. Auf diese Weise ist es möglich, die Überhitzung der aufladbaren Batterie mit der beschriebenen, einfachen Schutzschaltung in der Form einer Parallelschaltung des ersten und des zweiten PTC-Widerstandes 11, 12 abzusichern.

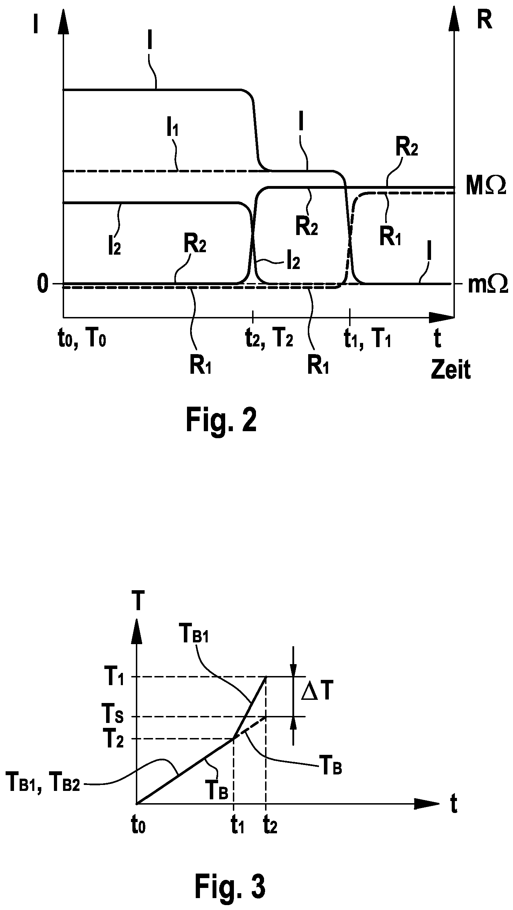

Fig. 2 zeigt in einer schematischen Darstellung eine Situation, bei der Strom von der Batterie 3, in diesem Fall von einer aufladbaren Batterie 3 abgegeben oder beim Laden aufgenommen wird. Das Diagramm der Fig. 2 zeigt die zeitliche Entwicklung eines Stromes I, der auf einer linken Y-Achse aufgetragen ist, wobei die Zeit t über die X-Achse verläuft. Auf einer rechten Y-Achse ist der Widerstand R für den ersten und den zweiten PTC-Widerstand 11, 12 aufgetragen.

Zum Startzeitpunkt to herrscht die Temperatur und es fließt ein Gesamtstrom I über die Parallelschaltung. Der Gesamtstrom I teilt sich in einen ersten Teilstrom I1 des ersten PTC-Widerstandes 11 und in einen zweiten Teilstrom 12 des zweiten PTC-Widerstandes 12 auf. Die zwei Teilströme I1 und I2 addieren sich zu dem Gesamtstrom I. Der Gesamtstrom I ist als durchgezogene Linie, der erste Teilstrom I1 ist als gestrichelte Linie und der zweite Teilstrom I2 ist wieder als durchgezogene Linie dargestellt. Zwischen dem Startzeitpunkt to und einem ersten Zeitpunkt tl sind auch die Widerstände des ersten PTC-Widerstandes 11 und des zweiten PTC-Widerstandes 12 gering, wobei der elektrische Widerstand des ersten PTC-Widerstandes 11 als gestrichelte Linie und der elektrische Widerstand des zweiten PTC-Widerstandes 12 als durchgezogene Linie dargestellt sind. Die Temperatur steigt von der Starttemperatur T0 bis zur zweiten Temperatur T2 beim zweiten Zeitpunkt t2 an. Die zweite Temperatur T2 stellt die Schalttemperatur des zweiten PTC-Widerstandes 12 dar, bei der der elektrische Widerstand R2 des zweiten PTC-Widerstandes 12 sehr stark auf einen Sperrwert ansteigt und für die elektrische Stromleitung keine Leistungsübertragung mehr ermöglicht.

In dem dargestellten Ausführungsbeispiel liegt der Sperrwert im Bereich von 11 Ω. Aufgrund des starken Anstieges des elektrischen Widerstandes des zweiten PTC-Widerstandes 12 bei der zweiten Temperatur T2 sinkt der Gesamtstrom I der Parallelschaltung bei der zweiten Temperatur T2 auf den ersten Strom I1 des ersten PTC-Widerstandes 11, der bei der zweiten Temperatur T2 und darüber hinaus noch leitend ist.

Steigt nun die Temperatur der Batterie 3 weiterhin an, so wird zwischen der zweiten Temperatur T2 und der ersten Temperatur T1 die Batterie 3 nur über den ersten PTC-Widerstand 11 mit Strom versorgt. Erreicht nun die Batterie 3 die erste Temperatur Tl, die der Schalttemperatur des ersten PTC-Widerstandes 11 entspricht, so steigt auch der Widerstand R1 des ersten PTC-Widerstandes 11 sehr stark an und erreicht einen Wert, der im Sinne der Leistungsübertragung keine Stromleitung mehr ermöglicht. In dem dargestellten Ausführungsbeispiel liegt der Sperrwert des ersten PTC-Widerstandes 11 bei einem ähnlichen Sperrwert wie der zweite PTC-Widerstand 12, in diesem Ausführungsbeispiel im Bereich von 11 Ω. Aufgrund der sperrenden Schaltung des ersten PTC-Widerstandes 11 bei Erreichen der ersten Temperatur T1, die die Schalttemperatur für den ersten PTC-Widerstand 11 darstellt, sinkt der Gesamtstrom I, der über die Parallelschaltung 10 des ersten und des zweiten PTC-Widerstandes 11, 12 fließt, auf nahezu 0 A ab. Somit ist der elektrische Kontakt zwischen dem ersten elektrischen Kontakt 14 und dem Pluspol 4 der Batterie 3 sperrend geschaltet.

Der erste und der zweite PTC-Widerstand 11, 12 sind thermisch an die Batterie 3 angekoppelt, beispielsweise durch eine entsprechende nahe Anordnung des ersten und des zweiten PTC-Widerstandes 11, 12 an der Batterie 3 und/oder durch die Anordnung eines Wärme leitenden Materials zwischen der Batterie 3 und dem ersten und dem zweiten PTC-Widerstand 11, 12.

Durch die beschriebene Anordnung ist es möglich, einen ersten PTC-Widerstand 11 zu verwenden, der eine Schalttemperatur zwischen einem leitenden und einem sperrenden Zustand aufweist, die oberhalb der zum Schutz der Batterie 3 gewünschten Temperatur liegt. Dabei kann die erste Schalttemperatur des ersten PTC-Widerstandes 11 bis zu einigen °C oberhalb der Schutztemperatur der Batterie liegen. Zudem wird ein zweiter PTC-Widerstand 12 vorgesehen, der eine ausreichend hohe Stromtragfähigkeit aufweist, dessen Schalttemperatur zwischen einem leitenden und einem sperrenden Zustand, aber unterhalb der gewünschten Schalttemperatur für die thermische Absicherung der Batterie aufweist. Durch das Sperren des zweiten PTC-Widerstandes 12 wird erreicht, dass ein erhöhter Stromfluss durch den ersten PTC-Widerstand 11 erfolgt und damit durch die eigene Erwärmung des ersten PTC-Widerstandes 11 die Temperatur im ersten PTC-Widerstand 11 über die Temperatur der Batterie ansteigt und somit die Schalttemperatur des ersten PTC-Widerstandes 11 erreicht wird, obwohl die Temperatur der Batterie 3 noch unterhalb der Schalttemperatur des ersten PTC-Widerstandes 11 liegt und keine Beschädigung der Batterie 3 durch Überhitzung möglich ist. Somit wird die zusätzliche Eigenerwärmung des ersten PTC-Widerstandes 11 durch die Sperren-Schaltung des zweiten PTC-Widerstandes 12 ausgenutzt, um die Schalttemperatur des ersten PTC-Widerstandes 11 zu erreichen, obwohl die Temperatur der Batterie noch darunter liegt.

Abhängig von der gewählten Ausführungsform können in der Parallelschaltung 10 auch mehr als zwei PTC-Widerstände vorgesehen sein.

In der Darstellung der Fig. 2 liegt die tatsächliche Temperatur der Batterie 3 nach dem Sperrendschalten des zweiten PTC-Widerstandes 12 unter der Temperatur des ersten PTC-Widerstandes 11, insbesondere liegt die Temperatur der Batterie 3 bei Erreichen der ersten Schalttemperatur des ersten PTC-Widerstandes 11 noch immer unter der maximal zulässigen Temperatur, d.h. mindestens 1°C oder mehrere °C unter der Temperatur des ersten PTC-Widerstandes 11.

Fig. 3 zeigt ein zeitliches Diagramm der Temperaturen TB1, TB2, TB des ersten PTC-Widerstandes 11, des zweiten PTC-Widerstandes 12 und der Batterie 3 über der Zeit t aufgetragen. Mit TB1 ist die Temperatur des ersten PTC-Widerstandes 11, mit TB2 ist die Temperatur des zweiten Widerstandes 12, und TB ist die Temperatur der Batterie gekennzeichnet. Zwischen dem Startzeitpunkt T0 und einem ersten Zeitpunkt tl, bei dem Strom über die Parallelschaltung 10 geführt wird, steigt die Temperatur TB1, TB2, TB am ersten und am zweiten PTC-Widerstand 11, 12 und in der Batterie 3 annähernd gleich an. Dies ist im Diagramm in Form einer durchgezogenen Linie dargestellt. Zum ersten Zeitpunkt tl wird die Schalttemperatur T2 des zweiten PTC-Widerstandes 12 erreicht und der zweite PTC-Widerstand 12 sperrend geschaltet. Zu diesem Zeitpunkt fließt dann der gesamte Strom über den ersten PTC-Widerstand 11. Dies führt dazu, dass die Temperatur TB1 des ersten PTC-Widerstandes 11, die als durchgezogene Linie dargestellt ist, stärker ansteigt als die Temperatur TB in der Batterie 3, die als gestrichelte Linie dargestellt ist. Zum zweiten Zeitpunkt t2 erreicht die Temperatur des ersten PTC-Widerstandes 11 die Schalttemperatur T1 des ersten PTC-Widerstandes 11, obwohl die Temperatur der Batterie 3 noch deutlich unter der Schalttemperatur des ersten PTC-Widerstandes 11 ist. Somit ist es möglich, mit zwei PTC-Widerständen, deren Schalttemperaturen nicht identisch mit der Temperatur sind, bei der die Batterie vor einer Überhitzung geschützt werden muss, eine Schutzschaltung gegen eine Überhitzung der Batterie bereitzustellen. Abhängig von der gewählten Ausführungsform kann auch ein erster PTC-Widerstand 11 verwendet werden, der genau die Schalttemperatur TS aufweist, bei der die Batterie 3 vor einer Überhitzung geschützt werden muss. In dieser Ausführungsform bietet die Parallelschaltung des ersten und zweiten PTC-Widerstandes 11, 12 den Vorteil, dass der Gesamtwiderstand deutlich reduziert ist.

Beispielsweise liegt die Schalttemperatur des ersten PTC-Widerstandes 11 zwischen 0,5 und 5° höher als die gewünschte Abschalttemperatur der Batterie 3. Die Abschalttemperatur des zweiten PTC-Widerstandes 12 liegt beispielsweise zwischen 0,5 und 5° niedriger als die gewünschte Abschalttemperatur der Batterie 3.

Zu dem Zeitpunkt, zu dem der erste und der zweite PTC-Widerstand 11, 12 leitend sind, verteilt sich die Stromlast umgekehrt proportional zu den Innenwiderständen des ersten und des zweiten PTC-Widerstandes 11, 12. Somit kann bis zum Erreichen der Schalttemperatur des zweiten Widerstandes 12 die Batterie 3, insbesondere in der Ausführung einer aufladbaren Batterie 3, d.h. eines Akkus normal betrieben werden. Auch nach dem Überschreiten der Schalttemperatur des zweiten PTC-Widerstandes 12 ist noch eine Stromabgabe oder eine Stromzufuhr zur aufladbaren Batterie 3 möglich. Nach dem Sperrend-Schalten des zweiten PTC-Widerstandes 12 fließt der gesamte Strom über den ersten Widerstand 11. Hierdurch erfährt der erste PTC-Widerstand 11 eine zusätzliche Eigenerwärmung und erreicht dadurch relativ schnell seine eigene Abschalttemperatur, sodass der Stromfluss vollständig unterbrochen wird.

## Patentansprüche

1. Anordnung mit wenigstens einer Batterie (3) mit zwei elektrischen Kontakten (14, 15), wobei ein erster elektrischer Kontakt (14) mit einem ersten Pol (4) der Batterie (3) und ein zweiter elektrischer Kontakt (15) mit einem zweiten Pol (5) der Batterie (3) verbunden ist, wobei zwischen dem ersten Kontakt (14) und dem ersten Pol (4) eine Parallelschaltung (10) aus einem ersten und einem zweiten PTC-Widerstand (11, 12) angeordnet ist, wobei der erste PTC-Widerstand (11) bei einer ersten Temperatur (T1) derart sperrend schaltet, dass ein elektrischer Widerstand (R1) des ersten PTC-Widerstands (11) auf einen Sperrwert ansteigt und im Sinne einer Leistungsübertragung keine Stromleitung mehr erfolgt, **dadurch gekennzeichnet, dass** der zweite PTC-Widerstand (12) bei einer zweiten Temperatur (T2) derart sperrend schaltet, dass ein elektrischer Widerstand (R2) des zweiten PTC-Widerstands (12) auf einen Sperrwert ansteigt und im Sinne einer Leistungsübertragung keine Stromleitung mehr erfolgt, wobei die erste Temperatur (T1) größer als die zweite Temperatur (T2) ist, und wobei der erste PTC-Widerstand (11) eine höhere Stromtragfähigkeit als der zweite PTC-Widerstand (12) aufweist.

2. Anordnung nach Anspruch 1, **dadurch gekennzeichnet, dass** die Batterie (3) eine aufladbare Batterie darstellt.

3. Anordnung nach einem der Ansprüche 1 oder 2, **dadurch gekennzeichnet, dass** die Batterie (3) Lithium-Ionen aufweist.

4. Anordnung nach Anspruch 3, **dadurch gekennzeichnet, dass** eine Kathode (16) der Batterie (3) Lithium-Eisen-Phosphat aufweist.

5. Anordnung nach einem der Ansprüche 2 bis 4, **dadurch gekennzeichnet, dass** die aufladbare Batterie (3) über den ersten und den zweiten Kontakt (14, 15) beladen und entladen wird.

6. Anordnung nach einem der Ansprüche 1 bis 5, **dadurch gekennzeichnet, dass** eine Schutztemperatur, bei der die Anordnung die Batterie (3) elektrisch isoliert, zwischen der ersten und der zweiten Temperatur (T1, T2) liegt, bei der die zwei PTC-Widerstände (11, 12) sperrend schalten.

7. Anordnung nach einem der vorhergehenden Ansprüche, **dadurch gekennzeichnet, dass** der Sperrwert des ersten und des zweiten PTC-Widerstands (11, 12) im Bereich von 11 Ω liegt.

8. Anordnung nach einem der vorhergehenden Ansprüche, **dadurch gekennzeichnet, dass** die erste Temperatur (T1) zwischen 0,5 und 5° höher und die zweite Temperatur (T2) zwischen 0,5 und 5° niedriger liegt, als die gewünschte Abschalttemperatur der Batterie (3).

## Claims

1. Arrangement comprising at least one battery (3) with two electrical contacts (14, 15), wherein a first electrical contact (14) is connected to a first pole (4) of the battery (3) and a second electrical contact (15) is connected to a second pole (5) of the battery (3), wherein a parallel circuit (10) consisting of a first and a second PTC thermistor (11, 12) is arranged between the first contact (14) and the first pole (4), wherein the first PTC thermistor (11) turns off at a first temperature (T1) in such a way that an electrical resistance (R1) of the first PTC thermistor (11) rises to an off value and current conduction no longer takes place for the purpose of power transmission, **characterized in that** the second PTC thermistor (12) turns off at a second temperature (T2) in such a way that an electrical resistance (R2) of the PTC thermistor (12) rises to an off value and current conduction no longer takes place for the purpose of power transmission, wherein the first temperature (T1) is greater than the second temperature (T2), and wherein the first PTC thermistor (11) has a higher current-carrying capacity than the second PTC thermistor (12).

2. Arrangement according to Claim 1, **characterized in that** the battery (3) constitutes a rechargeable battery.

3. Arrangement according to either of Claims 1 and 2, **characterized in that** the battery (3) contains lithium ions.

4. Arrangement according to Claim 3, **characterized in that** a cathode (16) of the battery (3) contains lithium iron phosphate.

5. Arrangement according to one of Claims 2 to 4, **characterized in that** the rechargeable battery (3) is charged and discharged via the first and the second contact (14, 15).

6. Arrangement according to one of Claims 1 to 5, **characterized in that** a protective temperature, at which the arrangement electrically insulates the battery (3), lies between the first and the second temperature (T1, T2) at which the two PTC thermistors (11, 12) turn off.

7. Arrangement according to one of the preceding claims, **characterized in that** the off value of the first and of the second PTC thermistor (11, 12) lies in the region of 11 Ω.

8. Arrangement according to one of the preceding claims, **characterized in that** the first temperature (T1) is between 0.5 and 5° higher, and the second temperature (T2) is between 0.5 and 5° lower, than the desired shutdown temperature of the battery (3).

## Revendications

1. Arrangement comprenant au moins une batterie (3) ayant deux contacts électriques (14, 15), un premier contact électrique (14) étant relié à un premier pôle (4) de la batterie (3) et un deuxième contact électrique (15) à un deuxième pôle (5) de la batterie (3), un circuit parallèle (10) composé d'une première et d'une deuxième résistance CTP (11, 12) étant monté en parallèle entre le premier contact (14) et le premier pôle (4), la première résistance CTP (11) commutant en blocage à une première température (T1) de sorte qu'une résistance électrique (R1) de la première résistance CTP (11) augmente à une valeur de blocage et aucune conduction de courant n'a plus lieu dans le sens d'une transmission de puissance, **caractérisé en ce que** la deuxième résistance CTP (12) commute en blocage à une deuxième température (T2) de sorte qu'une résistance électrique (R2) de la deuxième résistance CTP (12) augmente à une valeur de blocage et aucune conduction de courant n'a plus lieu dans le sens d'une transmission de puissance, la première température (T1) étant supérieure à la deuxième température (T2) et la première résistance CTP (11) possédant une capacité de transport de courant supérieure à celle de la deuxième résistance CTP (12).

2. Arrangement selon la revendication 1, **caractérisé en ce que** la batterie (3) représente une batterie rechargeable.

3. Arrangement selon l'une des revendications 1 et 2, **caractérisé en ce que** la batterie (3) possède des ions de lithium.

4. Arrangement selon la revendication 3, **caractérisé en ce qu'**une cathode (16) de la batterie (3) possède du lithium-fer-phosphate.

5. Arrangement selon l'une des revendications 2 à 4, **caractérisé en ce que** la batterie (3) rechargeable est chargée et déchargée par le biais du premier et du deuxième contact (14, 15).

6. Arrangement selon l'une des revendications 1 à 5, **caractérisé en ce qu'**une température de protection, à laquelle l'arrangement isole électriquement la batterie (3), se trouve entre la première et la deuxième température (T1, T2) auxquelles les deux résistances CTP (11, 12) commutent en blocage.

7. Arrangement selon l'une des revendications précédentes, **caractérisé en ce que** la valeur de blocage de la première et de la deuxième résistance CTP (11, 12) est de l'ordre de 11 Ω.

8. Arrangement selon l'une des revendications précédentes, **caractérisé en ce que** la première température (T1) est supérieure de 0,5 à 5° et la deuxième température (T2) est inférieure de 0,5 à 5° à la température de déconnexion souhaitée de la batterie (3).
